# EUROPEAN PATENT APPLICATION

(11) **EP 4 715 424 A1**
(43) Date of publication of application: **25.03.2026**
(21) Application number: 25741345.0
(22) Date of filing: 02.01.2025
(51) Int. Cl.: G01S 7/481

(54) **REGULATION METHOD, REGULATION DEVICE AND DETECTION DEVICE**

(30) Priority: 18.01.2024 CN 202410075237
(71) Applicant: Shenzhen Yinwang Intelligent Technologies Co., Ltd., Shenzhen, Guangdong 518110 (CN)
(72) Inventor: ZHENG, Yize, Shenzhen, Guangdong 518129 (CN); LIU, Jian, Shenzhen, Guangdong 518129 (CN); YE, Baining, Shenzhen, Guangdong 518129 (CN); LOU, Kongyu, Shenzhen, Guangdong 518129 (CN)
(74) Representative: Thun, Clemens
(86) International application number: PCT/CN2025/070221
(87) International publication number: WO 2025/152782

(57) **Abstract**

An adjustment method, an adjustment apparatus (300), and a detection apparatus (1000) are disclosed, to improve detection performance of the detection apparatus (1000). The method includes: generating an adjustment voltage based on stray light received by a detector (200); and adjusting a supply voltage of the detector (200) based on the adjustment voltage, to obtain a target voltage of the detector (200), where the target voltage is for adjusting photon detection efficiency PDE of the detector (200). Both the supply voltage and the target voltage are an operating voltage of the detector (200). The supply voltage is a voltage directly provided by a power supply to the detector (200), and the target voltage is a voltage obtained after the supply voltage is adjusted.

## Description

### CROSS-REFERENCE TO RELATED APPLICATIONS

This application claims priority to Chinese Patent Application No. 202410075237.X, filed with the China National Intellectual Property Administration on January 18, 2024 and entitled "ADJUSTMENT METHOD, ADJUSTMENT APPARATUS, AND DETECTION APPARATUS", which is incorporated herein by reference in its entirety.

### TECHNICAL FIELD

This application relates to the field of detection technologies, and in particular, to an adjustment method, an adjustment apparatus, and a detection apparatus.

### BACKGROUND

Photon detection efficiency (photon detection efficiency, PDE) refers to an extent to which photons are detected by a photoelectric detector. For example, PDE of a single photoelectric detector may be represented by a value obtained by dividing a detection count by a quantity of incident photons.

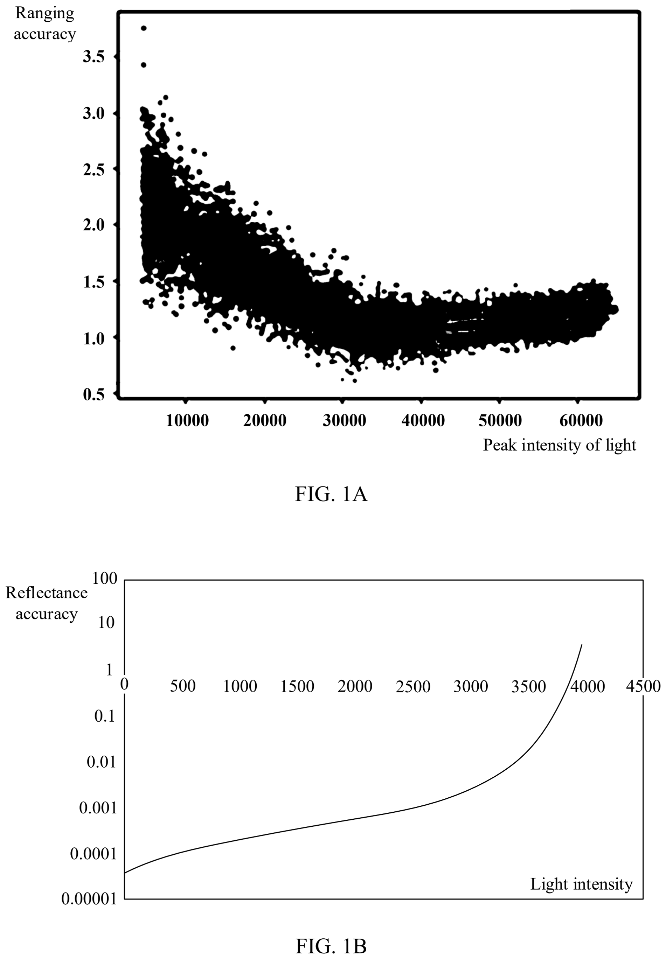

In a complex working environment of a vehicle-mounted lidar, light intensities of different echo signals received by a detector in the lidar differ greatly, and PDE of the existing detector is fixed, which affects performance indicators of the lidar such as ranging accuracy, estimated reflectance accuracy, and crosstalk. As shown in FIG. 1A, a higher peak intensity of light received by the detector indicates lower ranging accuracy of the detector. As shown in FIG. 1B, estimated reflectance accuracy increases with an increase in a light intensity.

Therefore, how to improve detection performance of the lidar in the complex environment is a technical problem that needs to be urgently resolved.

### SUMMARY

This application provides an adjustment method, an adjustment apparatus, and a detection apparatus, to improve detection performance of the detection apparatus.

According to a first aspect, this application provides an adjustment method. The method includes: generating an adjustment voltage based on stray light received by a detector; and adjusting a supply voltage of the detector based on the adjustment voltage, to obtain a target voltage of the detector, where the target voltage is for adjusting PDE of the detector.

Both the supply voltage and the target voltage may be used as an operating voltage of the detector. The supply voltage is a voltage directly provided by a power supply to the detector, and the target voltage is a voltage obtained after the supply voltage is adjusted.

In the method, an experimental study finds that there is an association relationship between a light intensity of the stray light received by the detector and the operating voltage of the detector. Therefore, the adjustment voltage for adjusting the supply voltage of the detector (namely, a voltage directly supplied by the power supply to the detector) may be generated based on the stray light received by the detector, and the supply voltage of the detector may be adjusted based on the adjustment voltage, to obtain the target voltage of the detector, where the target voltage may be used as the operating voltage of the detector. There is a linear mapping relationship between an operating voltage of the detector and PDE of the detector. Therefore, when the target voltage is used as the operating voltage of the detector, the PDE may be adjusted based on the target voltage, making the PDE a non-fixed value. Because the target voltage changes with the stray light, and the PDE changes with the target voltage, the PDE of the detector may have a high PDE value and a low PDE value. A value of the PDE directly affects a quantity of photons that are effectively captured and converted into usable signals by the detector. In a case of the high PDE value, the detector can more effectively detect and convert weak photons in a low-intensity echo signal. In a case of the low PDE value, the detector can effectively detect and convert photons in a high-intensity echo signal. In this way, a detection range of the detector is effectively expanded, so that the detector can effectively detect and convert both photons in a low-intensity echo signal and photons in a high-intensity echo signal. This helps improve a recognition capability and measurement accuracy of the detector for a target.

For example, for a same target, in a case of the high PDE value, the detector can detect and convert weak photons in a low-intensity echo signal reflected by the target, to form a corresponding point cloud; and in a case of the low PDE value, the detector can effectively detect and convert photons in a high-intensity echo signal reflected by the target, to form a corresponding point cloud. For the same target, the point cloud formed in a case of the high PDE value is combined with the point cloud formed in a case of the low PDE value, effectively improving a recognition capability and measurement accuracy of the detector for the target.

In a possible design, generating the adjustment voltage based on the stray light received by the detector includes: obtaining a mapping relationship between a peak light intensity of stray light and an adjustment voltage of the detector; and determining the adjustment voltage based on the stray light and the mapping relationship.

In this design, the mapping relationship between the peak light intensity of the stray light and the adjustment voltage of the detector may reflect an association relationship between the peak light intensity of the stray light and the adjustment voltage of the detector, so that the adjustment voltage of the detector may be determined based on the mapping relationship and stray light currently received by the detector.

In a possible design, the mapping relationship is obtained by analyzing the peak light intensity of the stray light and the adjustment voltage of the detector at different temperatures. In this design, the peak light intensity of the stray light and the adjustment voltage of the detector at different temperatures are analyzed, to obtain the mapping relationship between the peak light intensity of the stray light and the adjustment voltage of the detector. This can ensure reliability of the mapping relationship at different temperatures, so that detection performance of a detection apparatus at different temperatures can be improved by using the adjustment method provided in this embodiment of this application.

In a possible design, the peak light intensity of the stray light and the adjustment voltage of the detector are in a linear relationship with each other at a same temperature.

In a possible design, the target voltage and the supply voltage switch with each other to be input to the detector at different times. In this design, the target voltage and the supply voltage switch with each other to be input to the detector, so that the PDE of the detector can be dynamically adjusted. This ensures more precise adjustment of the PDE of the detector, and helps improve detection performance of the detector.

In a possible design, that the target voltage and the supply voltage switch with each other to be input to the detector at different times includes: the target voltage and the supply voltage switch with each other to be input to the detector in different frames; or the target voltage and the supply voltage switch with each other to be input to the detector in different slots; or the target voltage and the supply voltage switch with each other to be input to the detector upon triggering by different events. In this design, a plurality of implementations in which the target voltage and the supply voltage dynamically switch with each other to be input to the detector are provided.

In a possible design, that the target voltage and the supply voltage switch with each other to be input to the detector at different times includes: the target voltage is input to the detector when a first switch circuit is turned on, and the first switch circuit is triggered by a first switch signal; and the supply voltage is input to the detector when a second switch circuit is turned on, and the second switch circuit is triggered by a second switch signal, where timing of the first switch signal is the same as timing of the second switch signal, a level status of the first switch signal is opposite to a level status of the second switch signal, and both the first switch circuit and the second switch circuit are low-level triggered or high-level triggered.

In this design, the target voltage may be input to the detector when turning-on of the first switch circuit is triggered by the first switch signal, and the supply voltage is input to the detector when turning-on of the second switch circuit is triggered by the second switch signal. In addition, the timing of the first switch signal is the same as the timing of the second switch signal, the level status of the first switch signal is opposite to the level status of the second switch signal, and both the first switch circuit and the second switch circuit are low-level triggered or high-level triggered. In this way, the PDE of the detector can be dynamically adjusted based on specific timing.

In a possible design, the first switch signal and the second switch signal are obtained by performing level conversion on a control signal. In this design, the first switch signal and the second switch signal that have the same timing but opposite level statuses may be obtained by performing level conversion on the control signal.

In a possible design, timing and a level status of the control signal are determined based on transmitting timing of a laser and receiving timing of the detector. In this design, the timing and the level status of the control signal are determined by combining the transmitting timing of the laser and the receiving timing of the detector, so that the control signal matches working statuses of the laser and the detector. This helps enhance an adjustment effect of the PDE of the detector, thereby improving the detection performance of the detector.

According to a second aspect, an embodiment of this application provides an adjustment apparatus. The adjustment apparatus includes a control module and an adjustment module. The control module is configured to generate an adjustment voltage based on stray light received by a detector. The adjustment module is configured to adjust a supply voltage of the detector based on the adjustment voltage, to obtain a target voltage of the detector, where the target voltage is for adjusting photon detection efficiency PDE of the detector.

In a possible design, that the control module generates the adjustment voltage based on the stray light received by the detector includes: obtaining a mapping relationship between a peak light intensity of stray light and an adjustment voltage of the detector; and determining the adjustment voltage based on the stray light and the mapping relationship.

In a possible design, the target voltage and the supply voltage switch with each other to be input to the detector at different times.

In a possible design, that the target voltage and the supply voltage switch with each other to be input to the detector at different times includes: the target voltage and the supply voltage switch with each other to be input to the detector in different frames; or the target voltage and the supply voltage switch with each other to be input to the detector in different slots; or the target voltage and the supply voltage switch with each other to be input to the detector upon triggering by different events.

In a possible design, the adjustment apparatus further includes a first switch circuit and a second switch circuit, and the first switch circuit and the second switch circuit are respectively connected to the detector. That the target voltage and the supply voltage switch with each other to be input to the detector at different times includes: the target voltage is input to the detector when the first switch circuit is turned on, and the first switch circuit is triggered by a first switch signal; and the supply voltage is input to the detector when the second switch circuit is turned on, and the second switch circuit is triggered by a second switch signal, where timing of the first switch signal is the same as timing of the second switch signal, a level status of the first switch signal is opposite to a level status of the second switch signal, and both the first switch circuit and the second switch circuit are low-level triggered or high-level triggered.

In a possible design, the first switch signal and the second switch signal are obtained by performing level conversion on a control signal.

In a possible design, timing and a level status of the control signal are determined by the control module based on transmitting timing of a laser and receiving timing of the detector.

In a possible design, the mapping relationship is obtained by analyzing the peak light intensity of the stray light and the adjustment voltage of the detector at different temperatures.

In a possible design, the peak light intensity of the stray light and the adjustment voltage of the detector are in a linear relationship with each other at a same temperature.

According to a third aspect, an embodiment of this application further provides a detection apparatus. The detection apparatus includes a detector and the adjustment apparatus according to any one of the second aspect and the possible designs of the second aspect. Optionally, the detection apparatus further includes a laser.

According to a fourth aspect, an embodiment of this application further provides an electronic device. The electronic device includes the detection apparatus according to the third aspect.

According to a fifth aspect, an embodiment of this application further provides a computer-readable storage medium. The computer-readable storage medium stores a computer program or instructions. When the computer program or the instructions are executed by a communication apparatus, the method according to any one of the first aspect and the possible designs of the first aspect is implemented.

According to a sixth aspect, an embodiment of this application further provides a chip. The chip reads a computer program stored in a memory, to perform the method according to any one of the first aspect and the possible designs of the first aspect.

According to a seventh aspect, an embodiment of this application further provides a computer program product. The computer program product includes computer program code. When the computer program code is run, the method according to any one of the first aspect and the possible designs of the first aspect is implemented.

For technical effect that can be achieved by any possible design in any one of the second aspect to the seventh aspect, refer to technical effect that can be achieved by the first aspect or any possible design in the first aspect. Details are not described herein again.

### BRIEF DESCRIPTION OF DRAWINGS

FIG. 1A is a diagram of ranging accuracy of a detector according to an embodiment of this application;
FIG. 1B is a diagram of reflectance accuracy of a detector according to an embodiment of this application;
FIG. 2 is a diagram of a structure of a detection apparatus according to an embodiment of this application;
FIG. 3 is a diagram of an example of an application scenario of a lidar according to an embodiment of this application;
FIG. 4 is a diagram 1 of an architecture of a lidar according to an embodiment of this application;
FIG. 5 is a schematic flowchart of an adjustment method according to an embodiment of this application;
FIG. 6A is a diagram of a mapping relationship between a peak light intensity of stray light and a preset operating voltage of a detector at different temperatures according to an embodiment of this application;
FIG. 6B is a diagram of a mapping relationship between an average light intensity of stray light and a preset operating voltage of a detector at different temperatures according to an embodiment of this application;
FIG. 7 is a diagram of a mapping relationship between an operating voltage of a detector and PDE of the detector;
FIG. 8 is a diagram of a scenario in which a target voltage and a supply voltage dynamically switch with each other to be input to a detector;
FIG. 9 is a diagram of a structure of an adjustment apparatus according to an embodiment of this application;
FIG. 10 is a diagram 2 of an architecture of a lidar according to an embodiment of this application; and
FIG. 11 is a diagram 3 of an architecture of a lidar according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. It should be noted that, in descriptions of this application, "at least one" means one or more, and "a plurality of" means two or more. In view of this, in embodiments of this application, "a plurality of" may alternatively be understood as "at least two". The term "and/or" describes an association relationship for describing associated objects and represents that three relationships may exist. For example, A and/or B may represent the following three cases: Only A exists, both A and B exist, and only B exists. In addition, unless otherwise stated, the character "/" usually indicates an "or" relationship between the associated objects. In addition, it should be understood that, in descriptions of this application, terms such as "first" and "second" are merely used for distinguishing and description, but shall not be understood as indicating or implying relative importance, or shall not be understood as indicating or implying a sequence.

In embodiments of this application, a "connection" may be understood as an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, and A and B are connected through C.

This application provides an adjustment method, an adjustment apparatus, and a detection apparatus. In the method, an adjustment voltage may be generated based on stray light received by a detector 200, and a supply voltage of the detector 200 may be adjusted based on the adjustment voltage, to obtain a target voltage of the detector 200, where the target voltage is for adjusting PDE of the detector 200, so that detection performance of the detector 200 is effectively improved.

The following describes a system architecture in embodiments of this application with reference to specific accompanying drawings.

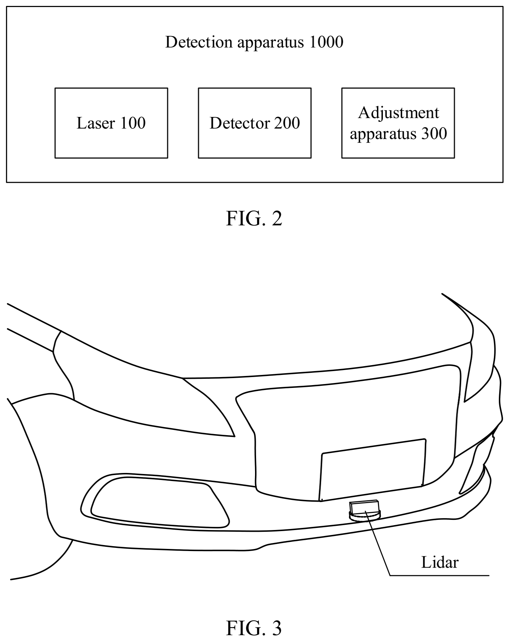

FIG. 2 shows a detection apparatus according to an embodiment of this application. The detection apparatus 1000 may include a laser 100, a detector 200, and an adjustment apparatus 300.

The laser 100 may transmit a detected optical signal to a target. The detector 200 may receive an echo signal and stray light that are reflected by the target. The adjustment apparatus 300 may generate an adjustment voltage based on the stray light received by the detector 200, and adjust a supply voltage of the detector 200 based on the adjustment voltage, to obtain a target voltage of the detector 200, where the target voltage may be for adjusting PDE of the detector 200, so that detection performance of the detector 200 is improved.

The detection apparatus 1000 may be, for example, a lidar. This is not specifically limited in this embodiment of this application. The laser 100 may be a single laser, or may be a laser chain formed by a plurality of lasers connected in series, or may be a laser ring formed by a plurality of lasers connected in parallel, or may be a laser array formed by a plurality of lasers connected in series and in parallel. A type of the laser may be an edge emitting laser (edge emitting laser, EEL), or may be a surface emitting laser (surface emitting laser, SEL). This is not specifically limited. The detector 200 may be, for example, one or more of a silicon carbide avalanche photodiode (silicon carbide avalanche photodiode, SiC APD), a single photon avalanche diode (single photon avalanche diode, SPAD), or a silicon photomultiplier (silicon photomultiplier, SiPM).

The following describes solutions in embodiments of this application in more detail by using an example in which the detection apparatus 1000 is the lidar.

FIG. 3 is a diagram of an example of an application scenario of a lidar according to an embodiment of this application. In this example, the lidar is mounted on a vehicle, and therefore is also referred to as a vehicle-mounted lidar. In addition to the vehicle-mounted lidar, the lidar further includes a shipborne lidar mounted on a ship, an airborne lidar mounted on a machine, or the like. In a possible example, as shown in FIG. 3, the lidar may be mounted, for example, at a head location of the vehicle. In this way, in a travel process of the vehicle, the lidar may send a lidar signal. After being irradiated to an object in a surrounding environment, the lidar signal is reflected by the object. A reflected target echo signal may be received by the lidar. Then, the lidar obtains information about the surrounding environment of the vehicle by performing detection based on the target echo signal, to assist or control a driving function, for example, including but not limited to autonomous driving or assisted driving, of the vehicle by using the environment information.

It should be noted that the lidar may be one of a mechanical lidar, a liquid lidar, a pure solid-state lidar, or a hybrid solid-state lidar (also referred to as a semi-solid-state lidar), or may be another type of lidar. This is not specifically limited in embodiments of this application. In addition, a housing of the lidar may be a cuboid, or may be a cube, a cylinder, an annular body, an amorphous body, or the like. A shape of the housing of the detection apparatus is not specifically limited in embodiments of this application.

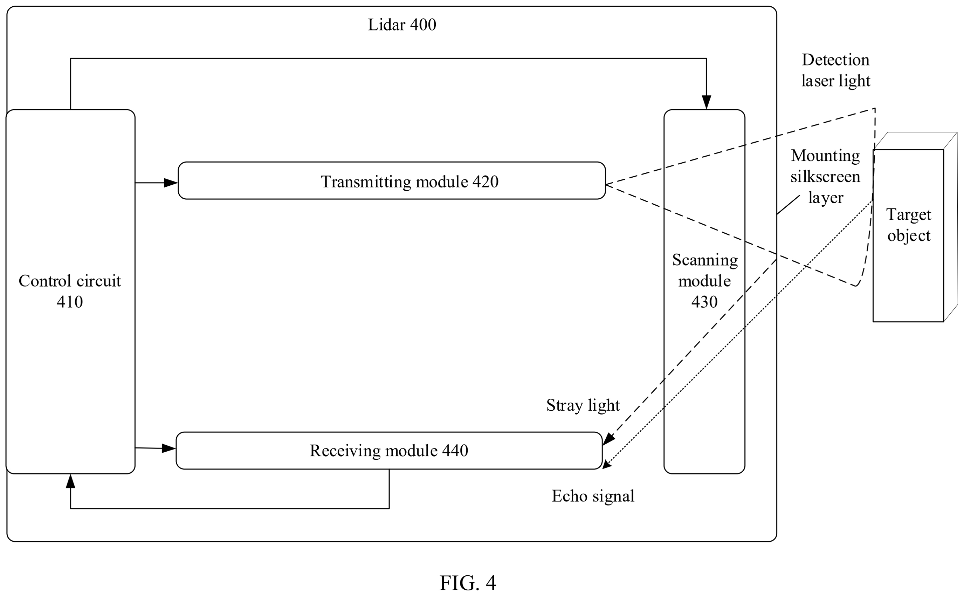

Further, for example, FIG. 4 is a diagram of an internal architecture of a lidar according to an embodiment of this application. As shown in FIG. 4, a lidar 400 may include a control circuit 410, a transmitting module 420, a scanning module 430, and a receiving module 440. The transmitting module 420 and the receiving module 440 include optical elements such as one or more of a lens, a light filter, a polarizer, a reflection mirror, a beam splitter, a prism, a window plate, and a scattering sheet. A quantity and types of the optical elements specifically included are related to optical designs of the transmitting module 420 and the receiving module 440 in the lidar 400, and are not specifically limited in embodiments of this application.

The control circuit 410 may include at least one integrated circuit chip. For example, the control circuit 410 may include at least one processor, and when the control circuit 410 includes a plurality of processors, types of the included processors may be the same or different. The processor is an element or a circuit having a processing capability, for example, including one or more of the following types: a general-purpose processor, a field programmable gate array (field programmable gate array, FPGA), a dedicated integrated chip (application-specific integrated circuit, ASIC), a neural-network processing unit (neural-network processing unit, NPU), a graphics processing unit (graphics processing unit, GPU), an application processor (application processor, AP), a modem processor, an image signal processor (image signal processor, ISP), a video codec, a digital signal processor (digital signal processor, DSP), a baseband processor, a network processor (network processor, NP), a digital signal processing circuit (digital signal processor, DSP), a micro controller unit (micro controller unit, MCU), a programmable controller (programmable logic device, PLD) or another programmable logic device, a discrete gate or a transistor logic device, and a discrete hardware component or another integrated chip. The general-purpose processor includes, for example, a central processing unit (central processing unit, CPU). In addition, all or some of the integrated circuit chips included in the control circuit 410 may be integrated together and presented in a form of a system on chip (system on chip, SoC). The adjustment apparatus 300 may be implemented through the control circuit 410.

The transmitting module 420 may include at least one laser (for example, a laser 100). The at least one laser may be connected in series or in parallel, and is configured to transmit a detection laser light under control of the control circuit 410.

The scanning module 430 may include one or more of a multi-faceted rotating mirror, a swing mirror, a micro-electro-mechanical system (micro-electro-mechanical system, MEMS) scanning mirror, and a prism, and is configured to change, under control of the control circuit 410, a scanning angle of the detection laser light transmitted by the transmitting module 420, so that the detection laser light traverses and scans for a target object in an environment. In different types of lidars, implementations of the scanning module 430 are different. There may alternatively be no scanning module in some types of lidars, for example, a phased array radar in the solid-state lidar. In addition, the detection laser light may be reflected by the target object in the environment, to generate an echo signal. After the detection laser light transmitted by the transmitting module 420 passes through the scanning module 430, a part of the detection laser light is reflected by a mounting silkscreen layer in the lidar, to obtain the stray light. The mounting silkscreen layer is a precision metal template. In some cases, the mounting silkscreen layer may be mounted in a small-area zone in an emergent window of the lidar, or mounted on a structural part around an emergent window of the lidar.

The receiving module 440 may include at least one detector (for example, a detector 200). The at least one detector 200 may be connected in series or in parallel, and is configured to: receive, under control of the control circuit 410, the echo signal and the stray light corresponding to the detection laser light, convert the stray light into an electrical signal (namely, an optical intensity signal), and send the electrical signal to the control circuit 410. The control circuit 410 adjusts an operating voltage of the detector 200 based on the stray light.

It should be noted that the lidar 400 may alternatively include more or fewer components than those shown in FIG. 4. This is not specifically limited in embodiments of this application.

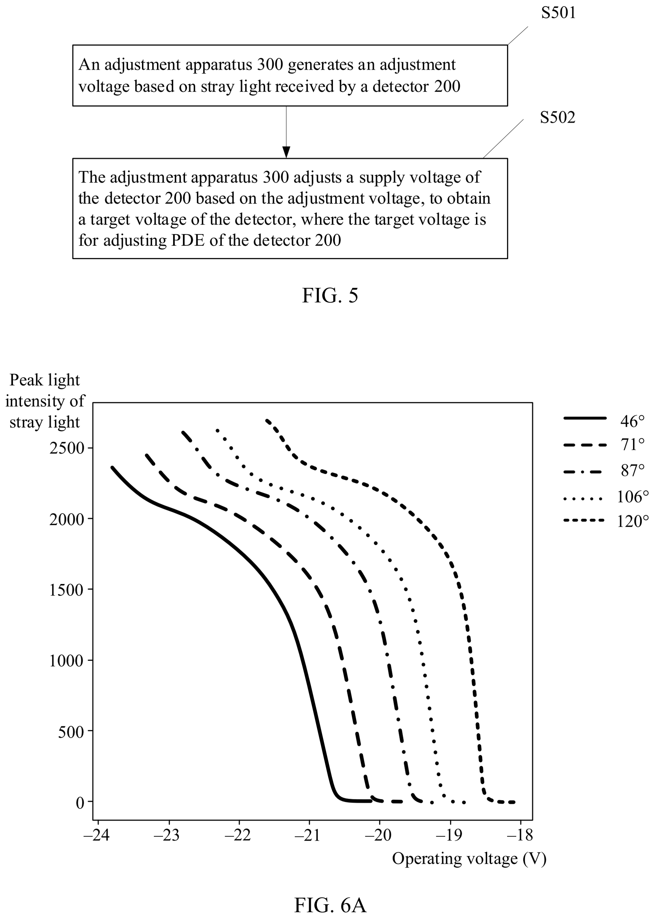

FIG. 5 shows an adjustment method according to an embodiment of this application. The method may be implemented by the adjustment apparatus 300. The method includes the following steps.

S501: The adjustment apparatus 300 generates an adjustment voltage based on stray light received by a detector 200.

In embodiments of this application, that the adjustment apparatus 300 generates the adjustment voltage based on the stray light received by the detector 200 may include, but is not limited to, the following implementations.

Implementation 1: The adjustment apparatus obtains a mapping relationship 1 between a peak light intensity of stray light and an adjustment voltage of the detector 200, and determines the adjustment voltage based on the stray light and the mapping relationship 1. The mapping relationship 1 may reflect an association relationship between the peak light intensity of the stray light and the adjustment voltage of the detector 200, so that an adjustment voltage corresponding to an operating voltage of the detector 200 is determined based on the mapping relationship 1 and stray light currently received by the detector 200.

The mapping relationship 1 is obtained by analyzing the peak light intensity of the stray light and the adjustment voltage of the detector 200 at different temperatures. In addition, the peak light intensity of the stray light and the adjustment voltage of the detector 200 may be in a linear relationship with each other at a same temperature. The adjustment voltage of the detector 200 is a difference between a current operating voltage of the detector 200 and a preset operating voltage of the detector 200. Therefore, the mapping relationship 1 may be determined based on a mapping relationship between a peak light intensity of stray light and a preset operating voltage of the detector 200 at different temperatures shown in FIG. 6A. In FIG. 6A, a vertical axis represents the peak light intensity of the stray light, and a horizontal axis represents the preset operating voltage of the detector 200. It can be learned from FIG. 6A that the peak light intensity of the stray light and the preset operating voltage of the detector 200 may be in a linear relationship with each other at a same temperature.

Implementation 2: The adjustment apparatus 300 obtains a mapping relationship 2 between an average light intensity of stray light and an adjustment voltage of the detector 200, and determines the adjustment voltage based on the stray light and the mapping relationship 2. The mapping relationship 2 may reflect an association relationship between the average light intensity of the stray light and the adjustment voltage of the detector 200, so that an adjustment voltage corresponding to an operating voltage of the detector 200 is determined based on the mapping relationship 2 and stray light currently received by the detector 200.

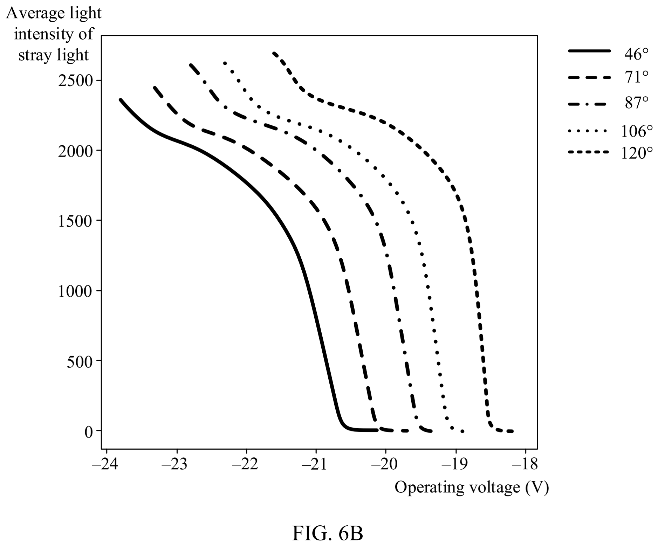

Similarly, the mapping relationship 2 is obtained by analyzing the average light intensity of the stray light and the adjustment voltage of the detector 200 at different temperatures. In addition, the average light intensity of the stray light and the adjustment voltage of the detector 200 may be in a linear relationship with each other at a same temperature. The adjustment voltage of the detector 200 is a difference between a current operating voltage of the detector 200 and a preset operating voltage of the detector 200. Therefore, the mapping relationship 2 may be determined based on a mapping relationship between an average light intensity of stray light and a preset operating voltage of the detector 200 at different temperatures shown in FIG. 6B. In FIG. 6B, a vertical axis represents the average light intensity of the stray light, and a horizontal axis represents the preset operating voltage of the detector 200. It can be learned from FIG. 6B that the average light intensity of the stray light and the preset operating voltage of the detector 200 may be in a linear relationship with each other at a same temperature.

Implementation 3: The adjustment apparatus 300 obtains a mapping relationship 1 between a peak light intensity of stray light and an adjustment voltage of the detector 200 and a mapping relationship 2 between an average light intensity of stray light and an adjustment voltage of the detector 200, and determines the adjustment voltage based on the stray light, the mapping relationship 1, and the mapping relationship 2. In this way, the adjustment voltage of the detector 200 is determined by combining the mapping relationship 1 and the mapping relationship 2, so that an operating voltage of the detector 200 can be more precisely adjusted.

S502: The adjustment apparatus 300 adjusts a supply voltage of the detector 200 based on the adjustment voltage, to obtain a target voltage of the detector 200, where the target voltage is for adjusting PDE of the detector 200.

In the adjustment method shown in FIG. 5, the adjustment apparatus 300 may generate, based on the stray light received by the detector, the adjustment voltage for adjusting the supply voltage of the detector (namely, a voltage directly supplied by a power supply to the detector), and may adjust the supply voltage of the detector based on the adjustment voltage, to obtain the target voltage of the detector, where the target voltage may be used as the operating voltage of the detector. There is a linear mapping relationship between an operating voltage of the detector and PDE of the detector. Therefore, when the target voltage is used as the operating voltage of the detector, the PDE may be adjusted based on the target voltage, making the PDE a non-fixed value. Because the target voltage changes with the stray light, and the PDE changes with the target voltage, the PDE of the detector may have a high PDE value and a low PDE value. A value of the PDE directly affects a quantity of photons that are effectively captured and converted into usable signals by the detector. In a case of the high PDE value, the detector can more effectively detect and convert weak photons in a low-intensity echo signal. In a case of the low PDE value, the detector can effectively detect and convert photons in a high-intensity echo signal. In this way, a detection range of the detector is effectively expanded, so that the detector can effectively detect and convert both photons in a low-intensity echo signal and photons in a high-intensity echo signal. This helps improve a recognition capability and measurement accuracy of the detector for a target.

For example, for a same target, in a case of the high PDE value, the detector can detect and convert weak photons in a low-intensity echo signal reflected by the target, to form a corresponding point cloud; and in a case of the low PDE value, the detector can effectively detect and convert photons in a high-intensity echo signal reflected by the target, to form a corresponding point cloud. For the same target, the point cloud formed in a case of the high PDE value is combined with the point cloud formed in a case of the low PDE value, effectively improving a recognition capability and measurement accuracy of the detector for the target.

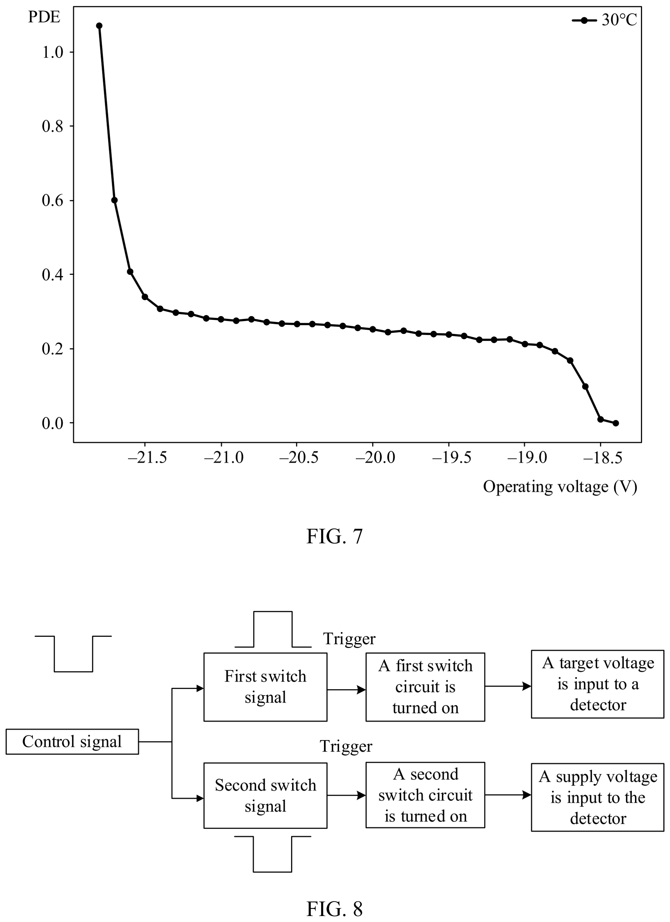

In this embodiment of this application, both the supply voltage and the target voltage may be used as the operating voltage of the detector 200. The supply voltage is a voltage directly provided by the power supply to the detector 200, and the target voltage is a voltage obtained after the supply voltage is adjusted. The target voltage and the supply voltage may switch with each other to be input to the detector 200 at different times, to dynamically adjust the operating voltage of the detector 200, thereby improving the PDE of the detector 200. For example, FIG. 7 is a diagram of a mapping relationship between an operating voltage of the detector 200 and PDE of the detector 200. When the operating voltage of the detector 200 is the target voltage, the adjustment apparatus 300 may adjust the PDE of the detector 200 based on the target voltage, thereby effectively improving detection performance of the detector 200. For example, at 30°C, when the target voltage is -21.5 V, the PDE of the detector 200 is adjusted to 0.34. For another example, at 30°C, when the target voltage is -21 V, the PDE of the detector 200 is adjusted to 0.28.

In this embodiment of this application, a plurality of manners in which the target voltage and the supply voltage dynamically switch with each other to be input to the detector 200 are provided. The manners may include, but are not limited to, the following implementations.

Manner 1: The target voltage and the supply voltage switch with each other to be input to the detector 200 in different frames.

In Manner 1, the adjustment apparatus 300 may control, by using a logical configuration signal, the target voltage and the supply voltage to switch with each other to be input to the detector 200 in different frames (frame) (that is, at a millisecond level), so that the detection performance of the detector 200 can be improved.

Manner 2: The target voltage and the supply voltage switch with each other to be input to the detector 200 in different slots (slot).

In Manner 2, the adjustment apparatus 300 may control, by using a logical configuration signal, the target voltage and the supply voltage to switch with each other to be input to the detector 200 in different slots (that is, at a microsecond level), so that the detection performance of the detector 200 can be improved.

Manner 3: The target voltage and the supply voltage switch with each other to be input to the detector 200 upon triggering (trigger) by different events.

In Manner 3, the adjustment apparatus 300 may control, through event configuration, the target voltage and the supply voltage to switch with each other to be input to the detector 200 upon triggering (trigger) by different events (that is, at a nanosecond level), effectively improving flexibility of dynamic switching input of the target voltage and the supply voltage to the detector 200. The event may be, for example, a pulse signal of specific timing.

Manner 4: The target voltage is input to the detector 200 when a first switch circuit is turned on, and the first switch circuit is triggered by a first switch signal; and the supply voltage is input to the detector 200 when a second switch circuit is turned on, and the second switch circuit is triggered by a second switch signal, where timing of the first switch signal is the same as timing of the second switch signal, a level status of the first switch signal is opposite to a level status of the second switch signal, and both the first switch circuit and the second switch circuit are low-level triggered or high-level triggered. In this way, the PDE of the detector 200 can be dynamically adjusted based on specific timing. The first switch signal and the second switch signal may be obtained by the adjustment apparatus 300 by performing level conversion on a control signal. Timing and a level status of the control signal are determined based on transmitting timing of a laser 100 and receiving timing of the detector 200. In this way, the timing and the level status of the control signal are determined by combining the transmitting timing of the laser 100 and the receiving timing of the detector 200, so that the control signal matches working statuses of the laser and the detector 200. This helps enhance an adjustment effect of the PDE of the detector 200, thereby improving the detection performance of the detector 200.

For example, FIG. 8 is a diagram of a scenario in which the target voltage and the supply voltage dynamically switch with each other to be input to the detector 200. The adjustment apparatus 300 generates a control signal shown in FIG. 8 based on the transmitting timing of the laser 100 and the receiving timing of the detector 200, and further performs level conversion on the control signal, to obtain the first switch signal and the second switch signal. The first switch signal and the control signal have same timing but opposite level statuses, and the second switch signal and the control signal have same timing and a same level status.

In one case, both the first switch circuit and the second switch circuit are triggered by a high-level signal. Specifically, when the first switch signal is at a high level, the first switch circuit is triggered to be turned on. In this case, the target voltage may be input to the detector 200 as the operating voltage of the detector 200. Because the target voltage is obtained after the supply voltage of the detector 200 is adjusted, the adjustment apparatus 300 may adjust the PDE of the detector 200 based on the target voltage, to improve stability of the PDE. When the first switch signal is at a high level, the second switch signal is at a low level, and in this case, the second switch circuit is in an off state, and the supply voltage of the detector 200 is not input to the detector 200. Correspondingly, when the first switch signal is at a low level, the first switch circuit is in an off state, and in this case, the target voltage is not input to the detector 200. When the first switch signal is at a low level, the second switch signal is at a high level, and in this case, turning-on of the second switch circuit is triggered by the second switch signal, and the supply voltage of the detector 200 is input to the detector 200 as the operating voltage of the detector 200.

In another case, both the first switch circuit and the second switch circuit are triggered by a low-level signal. Specifically, when the first switch signal is at a low level, the first switch circuit is triggered to be turned on. In this case, the target voltage may be input to the detector 200 as the operating voltage of the detector 200. Because the target voltage is obtained after the supply voltage of the detector 200 is adjusted, the adjustment apparatus 300 may adjust the PDE of the detector 200 based on the target voltage, to improve stability of the PDE. When the first switch signal is at a low level, the second switch signal is at a high level, and in this case, the second switch circuit is in an off state, and the supply voltage of the detector 200 is not input to the detector 200. Correspondingly, when the first switch signal is at a high level, the first switch circuit is in an off state, and in this case, the target voltage is not input to the detector 200. When the first switch signal is at a high level, the second switch signal is at a low level, and in this case, turning-on of the second switch circuit is triggered by the second switch signal, and the supply voltage of the detector 200 is input to the detector 200 as the operating voltage of the detector 200.

In this embodiment of this application, the first switch circuit and the second switch circuit may be disposed in a detection apparatus 1000. The first switch circuit may be separately connected to the detector 200 and the adjustment apparatus 300 in the detection apparatus 1000, and the second switch circuit may be separately connected to the detector 200 and the power supply in the detection apparatus 1000. The first switch circuit and the second switch circuit may be implemented through one or more switch devices. The switch device may be, for example, one or more of a plurality of types of switch transistors, such as a relay, a metal-oxide-semiconductor field-effect transistor (metal-oxide-semiconductor field-effect transistor, MOSFET), a bipolar junction transistor (bipolar junction transistor, BJT), and an insulated gate bipolar transistor (insulated gate bipolar transistor, IGBT). Details are not listed in this embodiment of this application.

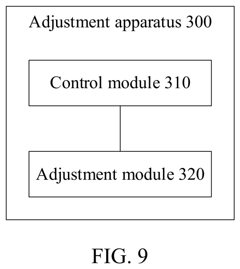

As shown in FIG. 9, an adjustment apparatus 300 may include a control module 310 and an adjustment module 320. The control module 310 may generate an adjustment voltage based on stray light received by a detector 200; and the adjustment module 320 may adjust a supply voltage of the detector 200 based on the adjustment voltage, to obtain a target voltage of the detector 200. For example, the control module 310 may be any one of a microprocessor (microcontroller unit, MCU), a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), or the like, or may be any one or a combination of another programmable logic device, a transistor logic device, or a hardware component. The adjustment module 320 may be implemented through an operational amplifier circuit. For example, the operational amplifier circuit may be an operational amplifier or a comparison amplifier.

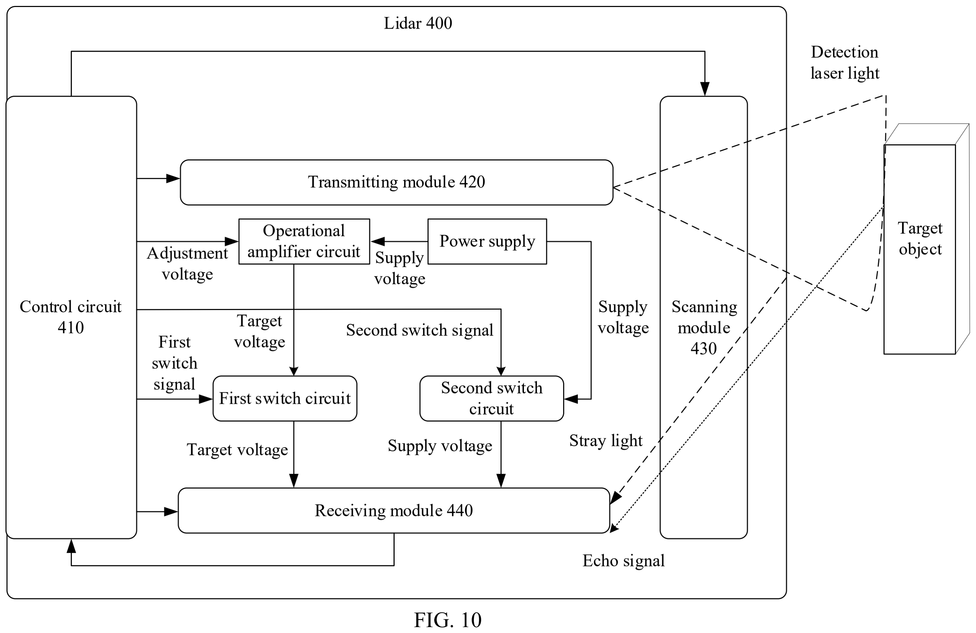

For example, when a detection apparatus 1000 is a lidar 400 shown in FIG. 10, a receiving module 440 in the lidar 400 is the detector 200, a control circuit 410 in the lidar 400 is the control module 310 in the adjustment apparatus 300, and an operational amplifier circuit in the lidar 400 is the adjustment module 320 in the adjustment apparatus 300. A first switch circuit is separately connected to the control circuit 410, the receiving module 440, and the operational amplifier circuit, and a second switch circuit is separately connected to the control circuit 410, the receiving module 440, and a power supply in the lidar 400, where the power supply may provide a supply voltage to the receiving module 440, and the supply voltage may be separately input to the operational amplifier circuit and the second switch circuit. After generating the adjustment voltage based on the stray light received by the receiving module 440, the control circuit 410 may input the adjustment voltage to the operational amplifier circuit. The operational amplifier circuit adjusts the supply voltage based on the adjustment voltage, to obtain the target voltage, and inputs the target voltage to the first switch circuit. The control circuit 410 may generate a first switch signal and a second switch signal, and input the first switch signal to the first switch circuit, and the first switch circuit controls, under triggering of the first switch signal, the target voltage to be input to the receiving module 440. The control circuit 410 may input the second switch signal to the second switch circuit, and the second switch circuit controls, under triggering of the second switch signal, the target voltage to be input to the receiving module 440. Specifically, when turning-on of the first switch circuit is triggered by the first switch signal, the target voltage is input to the receiving module 440 as an operating voltage of the receiving module 440; and when turning-on of the second switch circuit is triggered by the second switch signal, the supply voltage is input to the receiving module 440 as the operating voltage of the receiving module 440.

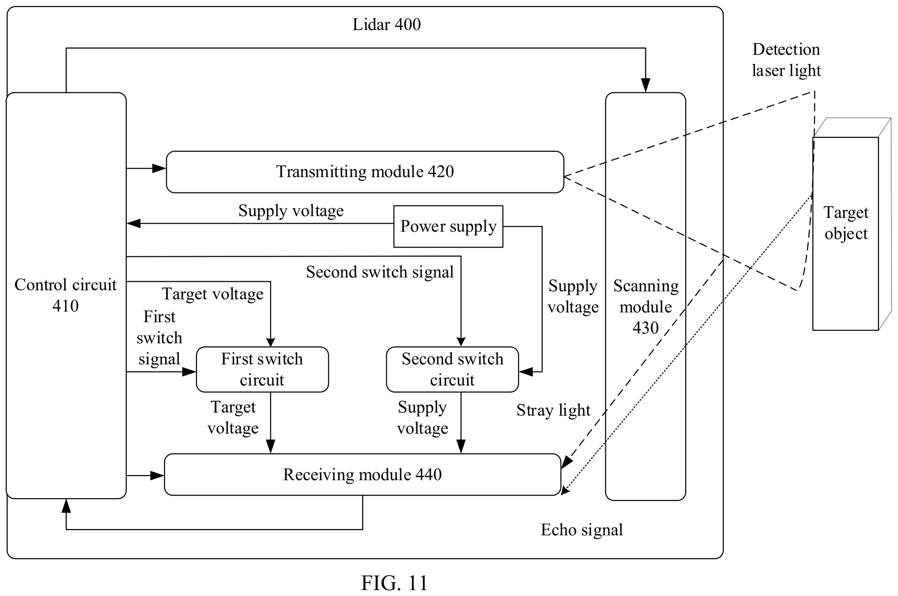

In some other embodiments of this application, the control module 310 and the adjustment module 320 in the adjustment apparatus 300 may be integrated into one module. When the control module 310 and the adjustment module 320 are integrated into one module, the module may be, for example, a control circuit 410 in a lidar 400 shown in FIG. 11. In FIG. 11, a power supply in the lidar 400 is separately connected to the control circuit 410 and a second switch circuit, and the power supply separately provides a supply voltage to the control circuit 410 and the second switch circuit. After generating an adjustment voltage based on stray light received by a receiving module 440, the control circuit 410 may adjust the supply voltage based on the adjustment voltage, to obtain a target voltage, and input the target voltage to a first switch circuit. Further, the control circuit 410 generates a first switch signal and a second switch signal, and inputs the first switch signal to the first switch circuit, and the first switch circuit controls, under triggering of the first switch signal, the target voltage to be input to the receiving module 440. The control circuit 410 may input the second switch signal to the second switch circuit, and the second switch circuit controls, under triggering of the second switch signal, the target voltage to be input to the receiving module 440.

An embodiment of this application further provides an electronic device. The electronic device includes the foregoing detection apparatus. The electronic device may be, for example, a car, an airplane, a ship, or a human robot.

An embodiment of this application provides a computer-readable storage medium. The computer-readable storage medium is configured to store a computer program or instructions. When the computer program or the instructions are run, any one of the foregoing adjustment methods is implemented. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like.

An embodiment of this application provides a computer program product including instructions. When the computer program product runs on a computer, any one of the foregoing adjustment methods is implemented. The computer program product may be software or a program product that includes instructions and that can run on a computing device or can be stored in any usable medium.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or a terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An adjustment method, wherein the method comprises:
generating an adjustment voltage based on stray light received by a detector; and
adjusting a supply voltage of the detector based on the adjustment voltage, to obtain a target voltage of the detector, wherein the target voltage is for adjusting photon detection efficiency PDE of the detector.

2. The method according to claim 1, wherein generating the adjustment voltage based on the stray light received by the detector comprises:
obtaining a mapping relationship between a peak light intensity of stray light and an adjustment voltage of the detector; and
determining the adjustment voltage based on the stray light and the mapping relationship.

3. The method according to claim 1 or 2, wherein the target voltage and the supply voltage switch with each other to be input to the detector at different times.

4. The method according to claim 3, wherein that the target voltage and the supply voltage switch with each other to be input to the detector at different times comprises:
the target voltage and the supply voltage switch with each other to be input to the detector in different frames; or
the target voltage and the supply voltage switch with each other to be input to the detector in different slots; or
the target voltage and the supply voltage switch with each other to be input to the detector upon triggering by different events.

5. The method according to claim 3, wherein that the target voltage and the supply voltage switch with each other to be input to the detector at different times comprises:
the target voltage is input to the detector when a first switch circuit is turned on, and the first switch circuit is triggered by a first switch signal; and
the supply voltage is input to the detector when a second switch circuit is turned on, and the second switch circuit is triggered by a second switch signal, wherein
timing of the first switch signal is the same as timing of the second switch signal, a level status of the first switch signal is opposite to a level status of the second switch signal, and both the first switch circuit and the second switch circuit are low-level triggered or high-level triggered.

6. The method according to claim 5, wherein the first switch signal and the second switch signal are obtained by performing level conversion on a control signal.

7. The method according to claim 6, wherein timing and a level status of the control signal are determined based on transmitting timing of a laser and receiving timing of the detector.

8. The method according to any one of claims 2 to 7, wherein the mapping relationship is obtained by analyzing the peak light intensity of the stray light and the adjustment voltage of the detector at different temperatures.

9. The method according to any one of claims 2 to 8, wherein the peak light intensity of the stray light and the adjustment voltage of the detector are in a linear relationship with each other at a same temperature.

10. An adjustment apparatus, comprising a control module and an adjustment module, wherein
the control module is configured to generate an adjustment voltage based on stray light received by a detector; and
the adjustment module is configured to adjust a supply voltage of the detector based on the adjustment voltage, to obtain a target voltage of the detector, wherein the target voltage is for adjusting photon detection efficiency PDE of the detector.

11. The apparatus according to claim 10, wherein that the control module generates the adjustment voltage based on the stray light received by the detector comprises:
obtaining a mapping relationship between a peak light intensity of stray light and an adjustment voltage of the detector; and
determining the adjustment voltage based on the stray light and the mapping relationship.

12. The apparatus according to claim 10 or 11, wherein the target voltage and the supply voltage switch with each other to be input to the detector at different times.

13. The apparatus according to claim 12, wherein that the target voltage and the supply voltage switch with each other to be input to the detector at different times comprises:
the target voltage and the supply voltage switch with each other to be input to the detector in different frames; or
the target voltage and the supply voltage switch with each other to be input to the detector in different slots; or
the target voltage and the supply voltage switch with each other to be input to the detector upon triggering by different events.

14. The apparatus according to claim 12, wherein the adjustment apparatus further comprises a first switch circuit and a second switch circuit, and the first switch circuit and the second switch circuit are respectively connected to the detector; and
that the target voltage and the supply voltage switch with each other to be input to the detector at different times comprises:
the target voltage is input to the detector when the first switch circuit is turned on, and the first switch circuit is triggered by a first switch signal; and
the supply voltage is input to the detector when the second switch circuit is turned on, and the second switch circuit is triggered by a second switch signal, wherein
timing of the first switch signal is the same as timing of the second switch signal, a level status of the first switch signal is opposite to a level status of the second switch signal, and both the first switch circuit and the second switch circuit are low-level triggered or high-level triggered.

15. The apparatus according to claim 14, wherein the first switch signal and the second switch signal are obtained by performing level conversion on a control signal.

16. The apparatus according to claim 15, wherein timing and a level status of the control signal are determined by the control module based on transmitting timing of a laser and receiving timing of the detector.

17. The apparatus according to any one of claims 11 to 16, wherein the mapping relationship is obtained by analyzing the peak light intensity of the stray light and the adjustment voltage of the detector at different temperatures.

18. The apparatus according to any one of claims 11 to 17, wherein the peak light intensity of the stray light and the adjustment voltage of the detector are in a linear relationship with each other at a same temperature.

19. A detection apparatus, comprising a detector and the adjustment apparatus according to any one of claims 10 to 18.

20. A computer-readable storage medium, wherein the computer-readable storage medium stores a computer program or instructions, and when the computer program or the instructions are executed by a communication apparatus, the method according to any one of claims 1 to 9 is implemented.

21. A chip, wherein the chip reads a computer program stored in a memory, to perform the method according to any one of claims 1 to 9.
